# EUROPEAN PATENT APPLICATION

(11) **EP 2 562 712 A1**
(43) Date of publication of application: **27.02.2013**
(21) Application number: 12180270.6
(22) Date of filing: 13.08.2012
(51) Int. Cl.: G06Q 50/16, G06Q 30/02

(54) **System, method and computer program product for parcel assessment**

(30) Priority: 23.08.2011 US 201113215936
(71) Applicant: The Boeing Company, Chicago, IL 60606-2016 (US)
(72) Inventor: Whelan, John, Burien, WA 98166 (US)
(74) Representative: McLeish, Nicholas Alistair Maxwell

(57) **Abstract**

A system, method and computer program product are provided in order to determine the value of a parcel based upon a number of different attributes and keywords relating to a number of features of the parcel. In the context of a system, a receiver module is configured to receive one or more attributes of the first parcel and one or more keywords of the first parcel. Each keyword may include a category type and a corresponding value. The system may also include an associative memory configured to compare the one or more attributes and one or more keywords of the first parcel with attributes and keywords, respectively, of a plurality of other parcels in order to determine a plurality of similar parcels. Further, the system may include an assessment module configured to determine the value of the first parcel based upon the prices of the plurality of similar parcels.

## Description

### TECHNOLOGICAL FIELD

Embodiments of the present disclosure relate generally to the assessment of the value of a parcel and, more particularly, to the assessment of the value of a parcel utilizing associative memory in order to determine a plurality of similar parcels.

### BACKGROUND

It is oftentimes desirable to evaluate parcels of real estate in a fair and consistent manner. For example, many homeowners and real estate agents desire to value a home in advance of placing the home on the market. Similarly, many prospective purchasers wish to value a home prior to making an offer to purchase another home. The value of a parcel may also be determined for other purposes, such as by assessors in an effort to properly define the tax value of the parcel.

It may be difficult, however, to value real estate parcels in an accurate manner because the value of real estate parcels may depend on numerous factors. For example, two parcels having the same size and general location may vary dramatically in value due to the specific location of the parcels, such as in an instance in which one of the parcels borders a freeway entrance and is therefore less valuable than another parcel that is situated in a nicely appointed neighborhood. While the valuation of a parcel is enhanced by considering a large number of features, such an assessment is not generally performed. While some features of real estate parcels are relatively straightforward to compare, such as price and location, other features of real estate parcels that may affect the value of the real estate parcels are not so easily compared. As such, most assessments of the value of a real estate parcel rely upon the price of similarly located parcels as determined, for example, by local appraisers, online appraisal tools, individuals involved in the sale of real estate parcels including sellers, buyers and real estate agents, comparisons with other similar real estate parcels and the results of previous assessments.

Because of the difficulties of comparing a number of features of real estate parcels, these assessments generally emphasize the price of the real estate parcel and group real estate parcels together that have prices within a similar range. By focusing upon prices, some are led to believe that the price of a parcel solely determines its value. For example, home buyers generally look for homes having a price within a predefined price range, as opposed to considering the value of the homes. As noted above, however, the price of a parcel does not solely determine its value. Instead, many factors determine the value of a parcel including, for example, the location of the parcel, the accessibility of the parcel, the age of the parcel, etc. Additionally, the value of a parcel is also based upon a number of other more subtle factors, such as the view afforded from the parcel, the proximity of the parcel to homes with frequently barking dogs or other loud disturbing noises, etc. Although these features also affect the value of a parcel, these features are not readily comparable so that it is difficult to define the impact of such features on the value of the parcel. As such, the value of parcels continues to generally be unfairly biased by their price to the at least partial exclusion of a number of other features that affect the value of the parcel, thereby failing to provide a true picture of the value of the parcel.

### BRIEF SUMMARY

A system, method and computer program product are therefore provided in order to determine comparable parcels used to obtain a better estimation of the value of a parcel. In this regard, the system, method and computer program product of one embodiment may determine the value of the parcel based upon a number of different attributes and keywords relating to a number of features of the parcel which may include price, but which may also include a number of other features. As such, the system, method and computer program product of one embodiment may permit the value of a parcel to be defined in a more fulsome manner without being biased as significantly by the price of the parcel.

In one embodiment, a system is provided for assessing the value of a first parcel. The system includes a receiver module configured to receive one or more attributes of the first parcel and one or more keywords of the first parcel possibly obtained from an associative memory. Each keyword may include a category type and a corresponding value. Each attribute may include a more generalized form of a keyword where the category type is broadened to a particular part of speech, such as an adjective, adverb, noun or verb. The system of this embodiment may also include an associative memory configured to compare the one or more attributes and one or more keywords of the first parcel with attributes and keywords, respectively, of a plurality of other parcels in order to determine a plurality of similar parcels. Further, the system may include an assessment module configured to determine the value of the first parcel based upon the prices of the plurality of similar parcels. In one embodiment, the system may also optionally include a display module configured to display a representation of the similar parcels in order of similarity and including the attributes and keywords of the similar parcels that are in common with the attributes and keywords of the first parcel.

The receiver module of one embodiment is further configured to receive assignments of weights for the one or more attributes or keywords. For example, the receiver module may be configured to receive assignments of weights by receiving a binary indication for each attribute or keyword as to whether the respective attribute or keyword is weighted or unweighted. Alternatively, the receiver module may be configured to receive assignments of weights by receiving a weight for a respective attribute or keyword that is selected from among a plurality of candidate weights. The associative memory of this embodiment may also be configured to determine the plurality of similar parcels based at least in part upon the weights for the one or more attributes or keywords.

The receiver module of one embodiment is further configured to receive assignments of radiuses for numeric category values for attributes or keywords. The radius permits the corresponding category value to match within a certain percentage or a certain amount, allowing for more associations. For example, the receiver module may be configured to receive assignments of a radius for each numeric category value as to the proximity allowed to be considered a match. The associative memory of this embodiment may also be configured to determine the plurality of similar parcels based at least in part upon the allowance of radiuses for the one or more numeric category values for attributes or keywords.

The assessment module of one embodiment may be configured to determine the value of the first parcel by determining an average of the prices of the plurality of similar parcels. Additionally or alternatively, the assessment module may be configured to determine the value of the first parcel by weighting the prices of the plurality of similar parcels based upon a measure of similarity with respect to the first parcel and by then determining a weighted average price of the plurality of similar parcels based upon the weighting of the prices of the plurality of similar parcels.

In another embodiment, a method is provided for assessing the value of a first parcel. The method includes receiving one or more attributes of the first parcel and one or more keywords of the first parcel possibly obtained from an associative memory. Each keyword may include a category type and a corresponding value. Each attribute may include a more generalized form of a keyword where the category type is broadened to a particular part of speech, such as an adjective, adverb, noun or verb. The method of this embodiment may also include using an associative memory to compare the one or more attributes and one or more keywords of the first parcel with attributes and keywords, respectively, of a plurality of other parcels in order to determine a plurality of similar parcels. Further, the method may include determining the value of the first parcel based upon the prices of the plurality of similar parcels. In one embodiment, the method may also optionally include causing a display of a representation of the similar parcels in order of similarity and including the attributes and keywords of the similar parcels that are in common with the attributes and keywords of the first parcel.

The method of one embodiment also receives assignments of weights for the one or more attributes or keywords. For example, the method may receive assignments of weights by receiving a binary indication for each attribute or keyword as to whether the respective attribute or keyword is weighted or unweighted. Alternatively, the method may receive assignments of weights by receiving a weight for a respective attribute or keyword that is selected from among a plurality of candidate weights. The method of this embodiment may also use the associative memory to determine the plurality of similar parcels based at least in part upon the weights for the one or more attributes or keywords. The method of one embodiment may also receive assignments of radiuses for numeric category values for attributes or keywords, thereby allowing the determination of the plurality of similar parcels to be based at least in part upon the allowance of radiuses for the one or more numeric category values for attributes or keywords.

The method of one embodiment also determines the value of the first parcel by determining an average of the prices of the plurality of similar parcels. Additionally or alternatively, the method may determine the value of the first parcel by weighting the prices of the plurality of similar parcels based upon a measure of similarity with respect to the first parcel and by then determining a weighted average price of the plurality of similar parcels based upon the weighting of the prices of the plurality of similar parcels.

In a further embodiment, a computer-readable storage medium is provided for assessing a value of a first parcel. The computer-readable storage medium has computer-readable program code portions stored therein that in response to execution by a processor cause an apparatus to receive one or more attributes of the first parcel and to receive one or more keywords of a first parcel possibly obtained from an associative memory. Each keyword may include a category type and a corresponding value. Each attribute may include a more generalized form of a keyword where the category type is broadened to a particular part of speech, such as an adjective, adverb, noun or verb. The computer-readable storage medium of this embodiment also has computer-readable program code portions stored therein that in response to execution by the processor cause the apparatus to use an associative memory to compare the one or more attributes and one or more keywords of the first parcel with attributes and keywords, respectively, of a plurality of other parcels in order to determine a plurality of similar parcels and to determine the value of the first parcel based upon the prices of the plurality of similar parcels.

The computer-readable storage medium of one embodiment may also have computer-readable program code portions for receiving assignments of weights for the one or more attributes or keywords. For example, the computer-readable program code portions may receive assignments of weights by receiving a binary indication for each attribute or keyword as to whether the respective attribute or keyword is weighted or unweighted. Alternatively, the computer-readable program code portions may receive assignments of weights by receiving a weight for a respective attribute or keyword that is selected from among a plurality of candidate weights. The computer-readable program code portions of this embodiment may also use the associative memory to determine the plurality of similar parcels based at least in part upon the weights for the one or more attributes or keywords. The computer-readable storage medium of one embodiment may also have computer-readable program code portions for receiving assignments of radiuses for numeric category values for attributes or keywords, thereby allowing the determination of the plurality of similar parcels to be based at least in part upon the allowance of radiuses for the one or more numeric category values for attributes or keywords.

The computer-readable storage medium of one embodiment may also have computer-readable program code portions for determining the value of the first parcel by determining an average of the prices of the plurality of similar parcels. Additionally or alternatively, the computer-readable storage medium may have computer-readable program code portions for determining the value of the first parcel by weighting the prices of the plurality of similar parcels based upon a measure of similarity with respect to the first parcel and for then determining a weighted average price of the plurality of similar parcels based upon the weighting of the prices of the plurality of similar parcels.

In accordance with embodiments of the present disclosure, the system, method and computer program product are provided in order to assess the value of a parcel in a manner that takes into account a number of attributes in addition to or instead of the price of the parcel such that the assessed value may be more fully reflective of the parcel and not unduly biased by the price of the parcel. However, the features, functions and advantages that have been discussed may be achieved independently in the various embodiments of the present disclosure and may be combined in other embodiments, further details of which may be seen with reference the detailed description and drawings.

### BRIEF DESCRIPTION OF THE DRAWINGS

Having thus described embodiments of the present disclosure in general terms, reference will now be made to the accompanying drawings, which are not necessarily drawn to scale, and wherein:
Figure 1 is a block diagram of a system for assessing the value of a parcel in accordance with one embodiment of the present disclosure;
Figure 2 is a flow chart illustrating the operations performed in order to assess the value of a parcel in accordance with one embodiment of the present disclosure;
Figure 3 is a graphical representation of the attributes and keywords associated with a particular parcel as provided in accordance with one embodiment of the present disclosure;
Figure 4 is a graphical representation of the weighting of the various category types in accordance with one embodiment of the present disclosure;
Figure 5 is a graphical representation of a listing of similar parcels including attributes and keywords that are in common with the first parcel in accordance with one embodiment of the present disclosure; and
Figure 6 is a graphical representation of the determination of the value of the first parcel based upon the prices of the similar parcels in accordance with one embodiment of the present disclosure.

### DETAILED DESCRIPTION

Embodiments of the present disclosure now will be described more fully hereinafter with reference to the accompanying drawings, in which some, but not all embodiments are shown. Indeed, these embodiments may be embodied in many different forms and should not be construed as limited to the embodiments set forth herein; rather, these embodiments are provided so that this disclosure will satisfy applicable legal requirements. Like numbers refer to like elements throughout.

Example embodiments in the present disclosure provide a system, method and computer readable storage medium for assessing the value of a parcel. In this regard, the parcel may be a uniquely identified property or other piece of real estate. As explained below, the system of example embodiments of the present disclosure may include or otherwise be in communication with a number of modules configured to perform respective operations described herein. Although shown as separate modules, it should be understood that the operations performed by more than one module may be integrated within and instead performed by a single module. It should also be understood that operations performed by one module may be separated and, instead, performed by more than one module.

A module may be embodied as various means for implementing the various functionalities of example embodiments of the present disclosure. A module may optionally include, for example, one or more processors, memory devices, Input/Output (I/O) interfaces, communications interfaces and/or user interfaces. The processor may include, for example, one or more of a microprocessor, a coprocessor, a controller, a special-purpose integrated circuit such as, for example, an ASIC (application specific integrated circuit), an FPGA (field programmable gate array), DSP (digital signal processor), or a hardware accelerator, processing circuitry or other similar hardware. According to one example embodiment, the processor may be representative of a plurality of processors, or one or more multi-core processors, operating individually or in concert. A multi-core processor enables multiprocessing within a single physical package. Further, the processor may be comprised of a plurality of transistors, logic gates, a clock (e.g., oscillator), other circuitry, and the like to facilitate performance of the functionality described herein. The processor may, but need not, include one or more accompanying digital signal processors (DSPs). A DSP may, for example, be configured to process real-world signals in real time independent of the processor. Similarly, an accompanying ASIC may, for example, be configured to perform specialized functions not easily performed by a more general purpose processor. In some example embodiments, the processor is configured to execute instructions stored in the memory device or instructions otherwise accessible to the processor. The processor may be specifically configured to operate such that the processor causes the module to perform various functionalities described herein.

Whether configured as hardware alone or via instructions stored on a computer-readable storage medium, or by a combination thereof, the processor may be an apparatus embodying or otherwise configured to perform operations of a module according to embodiments of the present disclosure while accordingly configured. Thus, in example embodiments where the processor is embodied as, or is part of, an ASIC, FPGA, or the like, the module is specifically configured hardware for conducting the operations described herein. Alternatively, in example embodiments where the processor is embodied as an executor of instructions stored on a computer-readable storage medium, the instructions specifically configure the module to perform the algorithms and operations described herein.

The memory device of a module may be one or more non-transitory computer-readable storage media that may include volatile and/or non-volatile memory. In some example embodiments, the memory device includes Random Access Memory (RAM) including dynamic and/or static RAM, on-chip or off-chip cache memory, and/or the like. Further, the memory device may include non-volatile memory, which may be embedded and/or removable, and may include, for example, Read-Only Memory (ROM), flash memory, magnetic storage devices (e.g., hard disks, floppy disk drives, magnetic tape, etc.), optical disc drives and/or media, non-volatile random access memory (NVRAM), and/or the like. The memory device may include a cache area for temporary storage of data. In this regard, at least a portion or the entire memory device may be included within the processor of the module.

Further, the memory device of a module may be configured to store information, data, applications, computer-readable program code instructions, and/or the like for enabling the module to carry out various functions in accordance with example embodiments of the present disclosure described herein. For example, the memory device may be configured to buffer input data for processing by the processor of the module. Additionally, or alternatively, the memory device may be configured to store instructions for execution by the processor.

The I/O interface of a module may be any device, circuitry, or means embodied in hardware, software or a combination of hardware and software that is configured to interface the processor of the module with other circuitry or devices, such as the communications interface and/or the user interface of the module. In some example embodiments, the processor may interface with the memory device via the I/O interface. The I/O interface may be configured to convert signals and data into a form that may be interpreted by the processor. The I/O interface may also perform buffering of inputs and outputs to support the operation of the processor. According to some example embodiments, the processor and the I/O interface may be combined onto a single chip or integrated circuit configured to perform, or cause the module to perform, various functionalities of an example embodiment of the present disclosure.

The communication interface of a module may be any device or means embodied in hardware, software or a combination of hardware and software that is configured to receive and/or transmit data from/to one or more networks and/or any other device or module in communication with the respective module. The communications interface may be configured to provide for communications in accordance with any of a number of wired or wireless communication standards. The processor of the module may also be configured to facilitate communications via the communications interface by, for example, controlling hardware included within the communications interface. In this regard, the communication interface may include, for example, one or more antennas, a transmitter, a receiver, a transceiver and/or supporting hardware, including, for example, a processor for enabling communications. The module of one example may communicate via the communication interface with various other network elements in a device-to-device fashion and/or via indirect communications.

The user interface of a module may be in communication with the processor of the module to receive user input via the user interface and/or to present output to a user as, for example, audible, visual, mechanical or other output indications. The user interface may include, for example, a keyboard, a mouse, a joystick, a display (e.g., a touch screen display), a microphone, a speaker, or other input/output mechanisms. Further, the processor may comprise, or be in communication with, user interface circuitry configured to control at least some functions of one or more elements of the user interface. The processor and/or user interface circuitry may be configured to control one or more functions of one or more elements of the user interface through computer program instructions (e.g., software and/or firmware) stored on a memory accessible to the processor (e.g., the memory device of the module). In some example embodiments, the user interface circuitry is configured to facilitate user control of at least some functions of the module through the use of a display and configured to respond to user inputs. The processor may also comprise, or be in communication with, display circuitry configured to display at least a portion of a user interface, the display and the display circuitry configured to facilitate user control of at least some functions of the module.

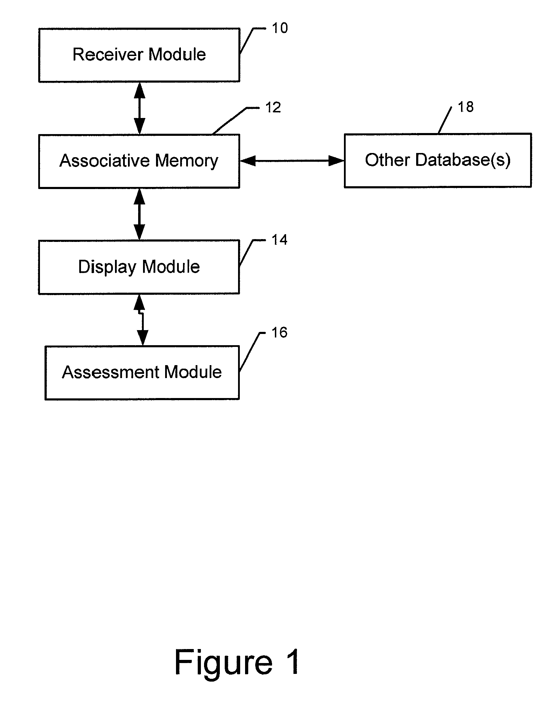

As shown in Figure 1, the system includes a receiver module 10 which, as described above, may include an I/O interface, a communication interface, a user interface and/or a processor that are specifically configured to receive data regarding a first parcel, that is, a parcel for which the valuation is sought. The receiver module 10 may be configured to receive the data regarding the first parcel from multiple sources and in multiple formats. In one embodiment, however, the receiver module 10 receives the data regarding the first parcel as input from a user provided via a user interface.

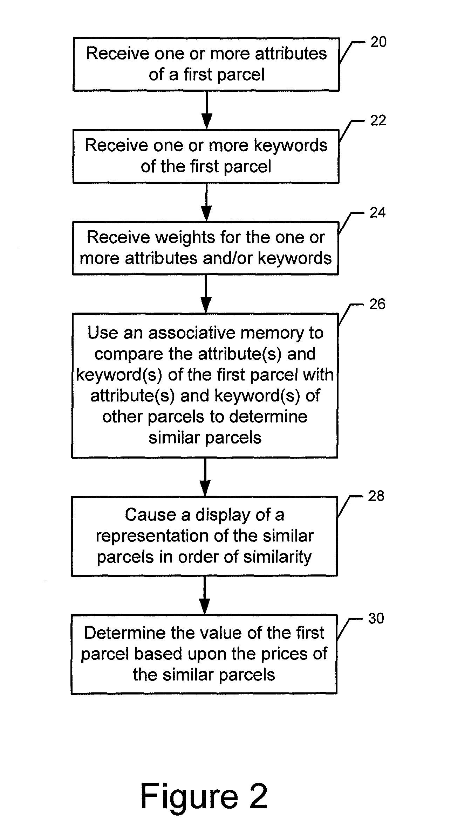

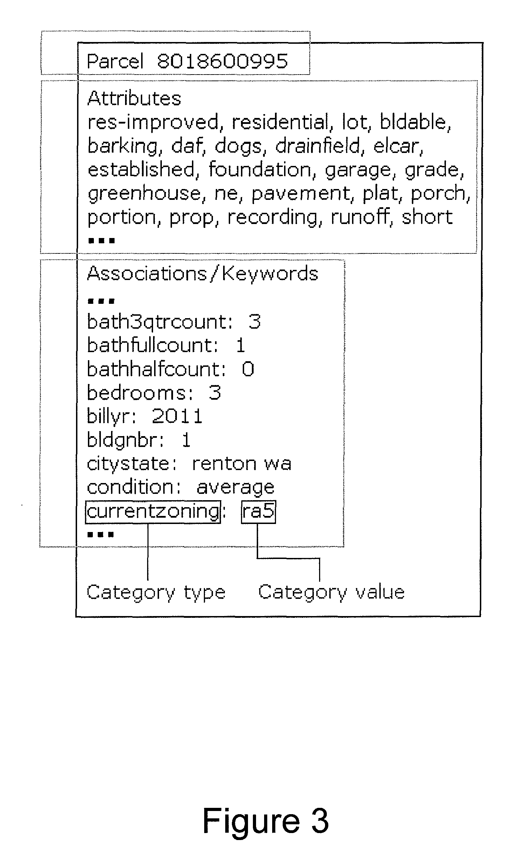

As shown in operation 20 of Figure 2, the data received by the receiver module 10 may include one or more attributes of the first parcel. Attributes may be adjectives, adverbs, nouns or verbs that define various features of the first parcel. By way of example, Figure 3 illustrates a record associated with a first parcel that is based upon user input. As shown, the parcel may be uniquely identified, such as by a unique number. The number may, in turn, be associated with a physical address to facilitate the location of the parcel. The first parcel of the embodiment of Figure 3 includes a number of attributes that have been received by the receiver module 10. In one embodiment, the various types of attributes may be defined in response to information obtained from an associative memory with a user thereafter providing input to identify or select the attributes from among the plurality of candidate attributes that are appropriate for the first parcel. In this regard, a user may provide the inputs in various manners including selections from among a plurality of predefined candidate attributes, the entry of free form text as well as other input techniques. As shown in the example of Figure 3 in which the parcel is a home, the attributes define various features of the home, the property on which the home is disposed and the region that surrounds or is proximate to the parcel which may impact the value of the parcel.

The receiver module 10 may also be configured to receive one or more keywords relating to the first parcel as shown in operation 22 of Figure 2. Keywords also define various features of the parcel that may affect the valuation of the parcel. In at least some embodiments, the keywords are a subset of the attributes that have been identified by the user and to which values and optional weightings have been assigned. By way of example, but not of limitation, the keywords may be attributes that have been identified by the user as being of more importance with respect to real estate terminology. Each keyword includes a category type and a corresponding category value. With reference to the example record of Figure 3, the category types of the keywords include bath3qtrcount, bathfullcount, bathhalfcount, bedrooms, billyr, bldgnbr, citystate, condition, currentzoning, etc. As shown in Figure 3, a corresponding value is assigned by the user and is associated with each category type. For example, the category value that is associated with the category type of bath3qtrcount is three, while the category value associated with currentzoning is ra5. As shown by the example of Figure 3, the category value may be numerical, alphanumerical, words or phrases, or the like. Although a parcel may be defined by any number of attributes and keywords, the identification of similar properties may be enhanced by including a substantial number of attributes and keywords.

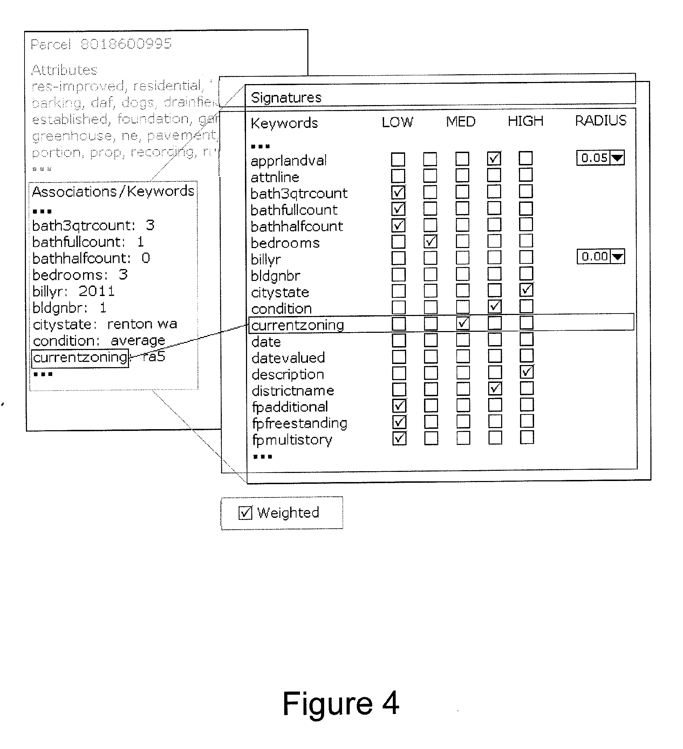

In one example embodiment, the receiver module 10 may also be configured to receive weights for one or more of the attributes or keywords, as shown in operation 24 of Figure 2. The weights define the influence or importance of the respective attributes or keywords in the subsequent identification of similar parcels. For example, an attribute or keyword that is weighted or more highly weighted will be more influential in the determination of similar parcels than another attribute or keyword that is unweighted or more lowly weighted. The weights may be defined in various manners. As shown in the graphical representation of Figure 4, for example, a plurality of predefined candidate weights may be identified for each of the keywords with the receiver module being configured to receive input from the user that defines the weight for one or more of the keywords. Although various types of predefined candidate weights may be utilized in various embodiments, the predefined candidate weights of the embodiment of Figure 4 include five candidate weights ranging from low to medium to high, with high representing a greater weight such that a highly weighted keyword will be more impactful during the determination of similar parcels than other keywords that are differently weighted, such as medium or low weighted keywords. Alternatively, the weights may a binary indication for each keyword with a respective keyword being either weighted or unweighted.

In regards to at least some of the attributes or keywords, the receiver module 10 may also be configured to receive an indication as to whether similar parcels must exactly match the category value of the respective keyword or whether the corresponding feature of another parcel would be considered to match the category value of the attribute or keyword in an instance in which the corresponding feature of the other parcel is within a predefined range of the category value even if the corresponding values do not match exactly. In this regard, the receiver module 10 may also be configured to receive an indication of a range about a category value within which a corresponding feature of another parcel would be considered to match the category value. In this regard and as shown in the embodiment of Figure 4, the range is designated as a radius with the user being able to provide input that defines the radius about the numerical category value of a respective attribute or keyword which will be considered sufficiently close so as to match the category value. For example, a radius of 0.05 is defined with respect to the apprlandval, while a radius of 0 is defined with respect to billyr, thereby requiring an exact match of the billyr. The range may be defined in various manners, such as in terms of a numerical value, a percentage of the category value or the like. In regards to the radius of 0.05 for the apprlandval keyword, the radius is defined in terms of a percentage such that another parcel will be considered to match the appraised land value if it is within 5% of the appraised land value of the first parcel.

As shown in Figure 1 and in operation 26 of Figure 2, the system also includes an associative memory 12 that is configured to compare the one or more attributes and the one or more keywords of the first parcel with attributes and keywords, respectively, of a plurality of other parcels in order to determine a plurality of similar parcels. Associative memory 12 is a data-storage device in which a location is identified by its informational content rather than by names, addresses, or relative positions, and from which data, such as data regarding similar parcels, may be retrieved. In one embodiment, the associative memory 12 is a multi-tier associative memory. The associative memory 12 determines the similarity between the other parcels and the first parcel in a manner that is at least partially based upon the number of attributes and keywords that are matched or otherwise associated. In one embodiment, the associative memory 12 is configured to take into account the weights that are assigned to at least some of the attributes or keywords so as to appropriately bias the effect upon the similarity between another property and the first property that is occasioned by an attribute or keyword that is found to match or otherwise be associated. As such, the matching or other association of a more heavily weighted attribute or keyword will more greatly influence the degree to which the parcels are considered similar than will the matching or other association of a more lightly weighted or unweighted attribute or keyword.

In determining the similarity between the first parcel and other parcels, the associative memory 12 may not only access its local memory, but may additionally or alternatively access other databases 18 so as to utilize the data stored by the other databases in its analysis. For example, the associative memory 12 may be able to access a number of other databases 18 such as publicly available databases including tax assessment databases, city planning zoning databases, transportation databases, map databases and the like. By way of a more particular example, the associative memory 12 may access a city's bike trail maps such that the close proximity of the first parcel to a bike trail may be taken into account (in a positive fashion) in determining the value of the first parcel. Associative memory 12 is configured to interact with information received from other databases 18 without having to make the search fields of the various databases compatible.

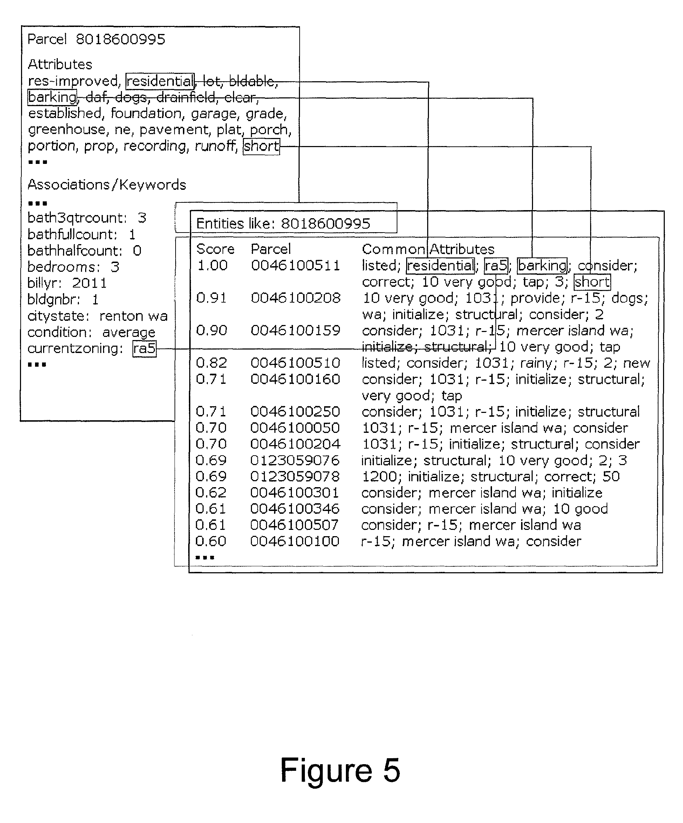

The system of the embodiment of Figure 1 may also include a display module 14 which, as described above, may include a user interface and/or a processor that are specifically configured to cause the display of a representation of a plurality of similar parcels as shown, for example, in operation 28 of Figure 2 and in the graphical representation of Figure 5. With respect to the graphical representation of Figure 5, a plurality of similar parcels are displayed with each similar parcel being uniquely identified, such as by number. In addition, the attributes and keywords, such as category type and/or category value, that match or are otherwise in common or associated between the first parcel and the similar parcel are listed in conjunction with the similar parcel. In one embodiment, the display module 14 is configured to cause the display of a representation to similar parcels in the order of similarity such that the first listed parcel is the most similar to the first parcel and the subsequently listed parcels are arranged in order of decreasing similarity. In the embodiment of Figure 5, a similarity score indicative of the relative similarity of the parcels to the first parcel is provided by the display module 14. Although the similarity scores may be defined in various manners, the similarity scores may be defined in the illustrated embodiment by the associative memory 12, the display module 14 or the like, such that the most similar parcel has a similarity score of 1.00 with the other similar parcels having a similarity score that defines the relative similarity between the respective parcel and the first parcel in comparison to the similarity between the first parcel and the most similar parcel.

Since the number and type of attributes and keywords that are in common between the similar parcels and the first parcel at least partially define the relative similarity, it is noted that the number of attributes and keywords that the parcels have in common with the first parcel is generally greater for the more similar parcels and lesser for the less similar parcels. As described above, however, the weights of the matching attributes and keywords may also be taken into account in determining the relative similarity between the parcels.

Of the attributes of the first parcel, some of the attributes may match or be otherwise associated with a larger number of other parcels than other ones of the attributes. As such, the display module 14 of one embodiment may cause the attributes of the first parcel to be displayed in an order that is based upon the relative importance of the attributes to the similarity determination, such as based upon the frequency with which the attributes were found to be in common with corresponding attributes of the other parcels. With reference to Figure 5, for example, "res-improved" was found to be a more frequent match than was "short". As such, a user may reference the listing of attributes of the first parcel in order to quickly discern the attributes that are more frequently found to be in common with the other parcels.

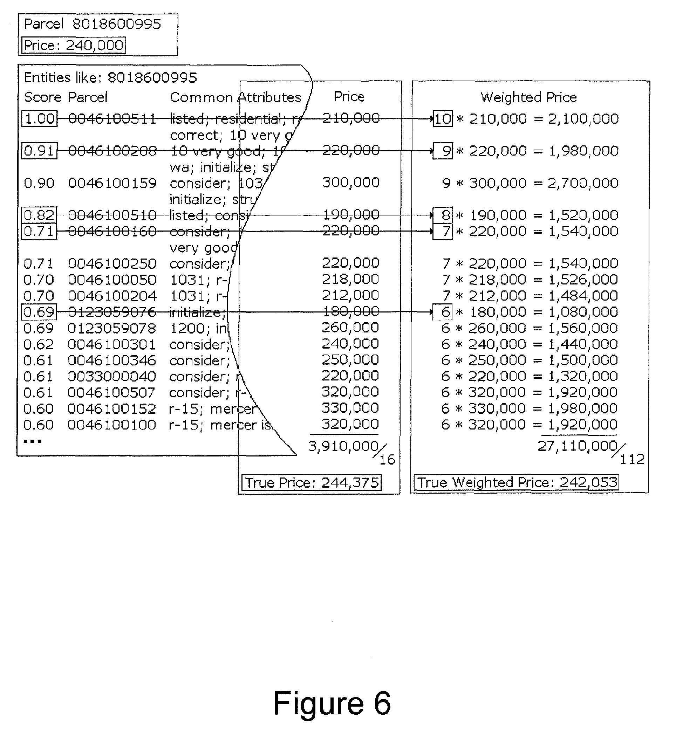

The system also includes an assessment module 16 which, as described above, may include a processor that is specifically configured in order to determine the value of the first parcel based upon the prices of the plurality of similar parcels. See operation 30 of Figure 2. The assessment module 16 may be configured to determine the value of the first parcel in various manners. For example, as shown in Figure 6, the assessment module in one embodiment may be configured to determine the value of the first parcel by determining an average of the prices of the plurality of similar parcels. In the embodiment illustrated in Figure 6, for example, the prices of each of the similar parcels are added and then divided by the total number of similar parcels to determine a value termed the "True Price".

Additionally or alternatively, the assessment module 16 may be configured to determine the value of the first parcel by weighting the prices of the plurality of similar parcels based upon the similarity of the similar parcels to the first parcel with the price of more similar parcels more greatly affecting or influencing the resulting value than the price of less similar parcels. In one embodiment, for example, the assessment module 16 may be configured to weight the prices of the plurality of the similar parcels based upon a measure of similarity with respect to the first parcel and to then determine the weighted average of the plurality of similar parcels based upon the weighting of the prices of the plurality of similar parcels. While the weighting of the prices of the plurality of similar parcels may be done in various manners, the assessment module 16 of one embodiment may weight the prices of the similar parcels based upon the similarity scores as shown in the embodiment of Figure 6. In this regard, the similarity score of 1.00 may result in a weighting of 10, a similarity score between 0.90 and 0.99 may result in a weighting of 9, a similarity score between 0.80 and 0.89 may result in a weighting of 8, and so on. The price of each similar parcel may then be weighted (such as by multiplying the price by the associated weighting) and the sum may be divided by the total sum of the weights to determine the value of the first parcel, termed the "True Weighted Price" in the embodiment of Figure 6. While one technique for weighting the prices of the similar parcels is described above and shown with respect to Figure 6, the assessment module 16 of other embodiments may employ other techniques for weighting the prices of similar parcels.

By basing the value of the first parcel upon the prices of parcels that have been determined to be similar based upon a consideration of a plurality of features, such as a number of features in addition to or instead of the price and location of the parcels, a more representative value of the first parcel may be determined in accordance with embodiments of the present disclosure. By determining a more accurate value of a parcel, a buyer, seller or others involved in a real estate transaction may more accurately evaluate a parcel and assessors may more appropriately value the parcel, such as for tax or other purposes. Additionally, the system, method and computer program product may be utilized in an iterative fashion. In this regard, the initial weighting of a plurality of attributes and keywords may result in the identification of a number of similar parcels having prices that deviate greatly from the current price of the first parcel. In this instance, a user may re-assign the weights of the attributes and keywords and may again submit the weighted attributes and keywords to the associative memory 12 in order to redefine the set of similar parcels. By repeating this process, a user may determine the weights of the attributes and keywords that most accurately reflects the commercial value of the various features of the parcels.

Figures 1 and 2 illustrate block diagrams of example systems, methods and/or computer program products according to example embodiments. It will be understood that each module or block of the block diagrams, and/or combinations of modules or blocks in the block diagrams, can be implemented by various means. Means for implementing the modules or blocks of the block diagrams, combinations of the modules or blocks in the block diagrams, or other functionality of example embodiments described herein may include hardware, and/or a computer program product including a non-transitory computer-readable storage medium (as opposed to a computer-readable transmission medium which describes a propagating signal) having one or more computer program code instructions, program instructions or executable computer-readable program code instructions stored therein. In this regard, program code instructions for carrying out the operations and functions of the modules of Figure 1 and the blocks of Figure 2 and otherwise described herein may be stored in the memory device of an example apparatus, and executed by a processor. As will be appreciated, any such program code instructions may be loaded onto a computer or other programmable apparatus (e.g., processor, memory device or the like) from a computer-readable storage medium to produce a particular machine, such that the particular machine becomes a means for implementing the functions specified in the block diagrams' modules and blocks.

These program code instructions may also be stored in a computer-readable storage medium that can direct a computer, processor or other programmable apparatus to function in a particular manner to thereby generate a particular machine or particular article of manufacture. The instructions stored in the computer-readable storage medium may produce an article of manufacture, where the article of manufacture becomes a means for implementing the functions specified in the block diagrams' modules or blocks. The program code instructions may be retrieved from a computer-readable storage medium and loaded into a computer, processor or other programmable apparatus to configure the computer, processor or other programmable apparatus to execute operations to be performed on or by the computer, processor or other programmable apparatus. Retrieval, loading and execution of the program code instructions may be performed sequentially such that one instruction is retrieved, loaded and executed at a time. In some example embodiments, retrieval, loading and/or execution may be performed in parallel such that multiple instructions are retrieved, loaded and/or executed together. Execution of the program code instructions may produce a computer-implemented process such that the instructions executed by the computer, processor or other programmable apparatus provide operations for implementing the functions specified in the block diagrams' modules or blocks.

Accordingly, execution of instructions associated with the operations of the modules or blocks of the block diagrams by a processor, or storage of instructions associated with the modules or blocks of the block diagrams in a computer-readable storage medium, supports combinations of operations for performing the specified functions. It will also be understood that one or more modules or blocks of the block diagrams, and combinations of modules or blocks in the block diagrams, may be implemented by special purpose hardware-based computer systems and/or processors which perform the specified functions, or combinations of special purpose hardware and program code instructions.

Many modifications and other embodiments set forth herein will come to mind to one skilled in the art to which these embodiments pertain having the benefit of the teachings presented in the foregoing descriptions and the associated drawings. Therefore, it is to be understood that the embodiments are not to be limited to the specific ones disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. A system for assessing a value of a first parcel, the system comprising:
a receiver module configured to receive one or more attributes of the first parcel, said receiver module also configured to receive one or more keywords relating to the first parcel, wherein each keyword comprises a category type and a corresponding value;
an associative memory configured to compare the one or more attributes and one or more keywords of the first parcel with attributes and keywords, respectively, of a plurality of other parcels in order to determine a plurality of similar parcels; and
an assessment module configured to determine the value of the first parcel based upon prices of the plurality of similar parcels.

2. A system according to Claim 1 wherein the receiver module is further configured to receive assignments of weights for the one or more attributes or keywords, and wherein the associative memory is further configured to determine the plurality of similar parcels based at least in part upon the weights for the one or more attributes or keywords.

3. A system according to Claim 2 wherein the receiver module is configured to receive assignments of weights by receiving a binary indication for each attribute or keyword as to whether the respective attribute or keyword is weighted or unweighted.

4. A system according to Claim 2 wherein the receiver module is configured to receive assignments of weights by receiving a weight for a respective attribute or keyword that is selected from among a plurality of candidate weights.

5. A system according to Claim 1 wherein the receiver module is further configured to receive an assignment of a radius for one or more of the attributes or keywords, wherein the associative memory is further configured to determine the plurality of similar parcels based at least in part upon the radius for the one or more attributes or keywords.

6. A system according to Claim 1 wherein the assessment module is configured to determine the value of the first parcel by determining an average of the prices of the plurality of similar parcels.

7. A system according to Claim 1 wherein the assessment module is configured to determine the value of the first parcel by:
weighting the prices of the plurality of similar parcels based upon a measure of similarity with respect to the first parcel; and
determining a weighted average price of the plurality of similar parcels based upon the weighting of the prices of the plurality of similar parcels.

8. A method for assessing a value of a first parcel, the method comprising:
receiving one or more attributes of the first parcel;
receiving one or more keywords relating to the first parcel, wherein each keyword comprises a category type and a corresponding value;
using an associative memory to compare the one or more attributes and one or more keywords of the first parcel with attributes and keywords, respectively, of a plurality of other parcels in order to determine a plurality of similar parcels; and
determining the value of the first parcel based upon the prices of the plurality of similar parcels.

9. A method according to Claim 8 further comprising receiving assignments of weights for the one or more attributes or keywords, wherein using the associative memory comprises determining the plurality of similar parcels based at least in part upon the weights for the one or more attributes or keywords.

10. A method according to Claim 9 wherein receiving assignments of weights comprises receiving a binary indication for each keyword as to whether the respective attribute or keyword is weighted or unweighted.

11. A method according to Claim 9 wherein receiving assignments of weights comprises receiving a weight for a respective attribute or keyword that is selected from among a plurality of candidate weights.

12. A method according to Claim 8 further comprising receiving an assignment of a radius for one or more of the attributes or keywords, wherein using the associative memory comprises determining the plurality of similar parcels based at least in part upon the radius for the one or more attributes or keywords.

13. A method according to Claim 8 wherein determining the value of the first parcel comprises determining an average of the prices of the plurality of similar parcels.

14. A method according to Claim 8 wherein determining the value of the first parcel comprises:
weighting the prices of the plurality of similar parcels based upon a measure of similarity with respect to the first parcel; and
determining a weighted average price of the plurality of similar parcels based upon the weighting of the prices of the plurality of similar parcels.

15. A computer-readable storage medium for assessing a value of a first parcel, the computer-readable storage medium having computer-readable program code portions stored therein that in response to execution by a processor cause an apparatus to:
receive one or more attributes of the first parcel;
receive one or more keywords relating to the first parcel, wherein each keyword comprises a category type and a corresponding value;
use an associative memory to compare the one or more attributes and one or more keywords of the first parcel with attributes and keywords, respectively, of a plurality of other parcels in order to determine a plurality of similar parcels; and
determine the value of the first parcel based upon the prices of the plurality of similar parcels.
